# EUROPÄISCHE PATENTSCHRIFT

(11) **EP 1 340 830 B1**
(45) Veröffentlichungstag und Bekanntmachung des Hinweises auf die Patenterteilung: **26.01.2005**
(21) Anmeldenummer: 03002794.0
(22) Anmeldetag: 07.02.2003
(51) Int. Cl.: C22C 38/22, C22C 38/24, C22C 38/30, C22C 38/40, C22C 38/42, C22C 38/44, C22C 38/46, C22C 38/48, B23D 61/12

(54) **Bimetall-Sägeband**
Bimetallic saw band
Scie à ruban bimetallique

(30) Priorität: 09.02.2002 DE 10205403
(43) Veröffentlichungstag der Anmeldung: 03.09.2003
(73) Patentinhaber: Stahlwerk Ergste Westig GmbH, 58239 Schwerte (DE)
(72) Erfinder: Pacher, Oskar Dr., 8041 Graz (AT); Lenoir, Werner, 59423 Unna (DE)
(74) Vertreter: König, Gregor Sebastian, Dipl.-Biol.

(56) Entgegenhaltungen:
- EP-A- 0 452 526
- EP-A- 0 569 349
- EP-B- 0 566 560
- DE-U- 20 002 593
- PATENT ABSTRACTS OF JAPAN vol. 014, no. 231 (M-0974), 16. Mai 1990 (1990-05-16) & JP 02 059211 A (HITACHI KOKI CO LTD), 28. Februar 1990 (1990-02-28)
- PATENT ABSTRACTS OF JAPAN vol. 007, no. 118 (C-167), 21. Mai 1983 (1983-05-21) & JP 58 037156 A (DAIDO TOKUSHUKO KK), 4. März 1983 (1983-03-04)

## Beschreibung

Die Erfindung bezieht sich auf ein Bimetall-Sägeband, bei dem zumindest die Zahnspitzen aus einem verschleißfesten Stahl und das Trägerband aus einem vergleichsweise zähen Stahl bestehen.

Sägebänder, einschließlich Stichsägen, müssen eine hohe Formbeständigkeit sowie eine hohe Verschleißfestigkeit besitzen und der hohen Beanspruchung durch Druck-, Biege- und Schubkräfte auch bei den nicht unerheblichen Temperaturen gewachsen sein, die sich aus der Reibung zwischen Sägeband und Schneidgut ergeben. Dies gilt namentlich für Sägebänder, die mit hoher Geschwindigkeit umlaufen und beim Umlenken um 180° einer starken Biegung unterliegen.

Da es schwierig ist, die erforderlichen Eigenschaften in einem einzigen Werkstoff zu vereinigen, bestehen Bimetall-Sägebänder heutzutage üblicherweise aus einem verhältnismäßig zähen Trägerband mit hoher Biegewechselfestigkeit und einem ebenfalls bandförmigen Schneidteil aus einem Schnellarbeitsstahl mit geringerer Zähigkeit, aber hoher Verschleißfestigkeit. Das Schneidband ist dabei so breit, daß sich daraus zumindest die Zahnspritzen des Sägebandes oder -blattes oder auch die Schneidzähne insgesamt herausarbeiten lassen.

Aus der EP 0 569 346 A1 ist auch bereits ein Bimetall-Sägeband oder -blatt aus einem Stahl-Trägerband mit 0,20 bis 0,40% Kohlenstoff, 2,5 bis 5,0% Chrom, 2,0 bis 3,0% Molybdän, 0,03 bis 0,04% Vanadium sowie als Komfeinungsmittel insgesamt unter 0,01% Niob und Titan einerseits sowie einem Schneidband aus einem Schnellarbeitsstahl mit 0,65 bis 1,8% Kohlenstoff, 3,0 bis 6,0% Chrom, 4,0 bis 12,0% Molybdän und 0,5 bis 5,0% Vanadium bekannt. Besonderes Kennzeichen dieses Sägebands ist unter dem Gesichtspunkt einer ausreichenden Dauerwechselfestigkeit bzw. Biegewechselfestigkeit die gleichzeitige Anwesenheit von Chrom, Vanadium und Molybdän in beiden Werkstoffen sowie die Begrenzung des Gesamtgehaltes an Niob und Titan im Trägerband auf höchstens 0,01%. Zur Verbesserung der Schweißbarkeit enthalten beide Werkstoffe des Sägebandes zudem Aluminium, und zwar bis 2,0% im Schneidteil und bis 0,15% im Trägerband.

Des weiteren beschreibt die japanische Offenlegungsschrift 63-007 351 ein Bimetall-Sägeband mit hoher Zähigkeit und Dauerfestigkeit aus einem niedrig legierten Stahl mit 0,25 bis 0,50% Kohlenstoff, unter 1,5% Nickel, 2,00 bis 6,00% Chrom, 0,20 bis 1,00% Vanadium, 0,20 bis 1,00% Molybdän und/oder unter 1,50% Wolfram, unter 0,30% Silizium, unter 0,50% Mangan, unter 0,015% Phosphor und unter 0,005% Schwefel bei insgesamt 0,20 bis 1,00% Molybdän und dem halben Wolframgehalt, unter 0,0015% Sauerstoff, 0,02 bis 0,20% Niob und/oder 0,02 bis 0,20% Titan sowie einem Schneidteil aus einem Hochgeschwindigkeitsstahl.

Weiterhin ist aus der US-Patentschrift 4 058 650 ein Trägerbandstahl mit 0,20 bis 0,33% Kohlenstoff, bis 1,5% Silizium, bis 1,5% Mangan, 3,5 bis 6,5% Chrom, 0,05 bis 0,40% Vanadium, 0,05 bis 0,10% Aluminium, 0,02 bis 0,30% Niob, 1,0 bis 3,0% Molybdän und/oder bis 4,0% Wolfram sowie einem Gesamtgehalt an Molybdän und dem halben Wolframgehalt von 1,0 bis 3,0% bekannt, der zur Verbesserung der Dauerfestigkeit und Zähigkeit des Grundgefüges noch bis 1,4% Kobalt und bis 1,5% Nickel enthalten kann. Dieser Trägerbandwerkstoff soll sich durch eine geringe Entkohlung und Gefügestabilität beim Verschweißen mit dem Schneidteil auszeichnen und weder seine Zähigkeit bei einer Wärmebehandlung des Schneidteils verlieren noch beim Anlassen mit höheren Temperaturen im Hinblick auf die Dauerfestigkeit eine Härte von etwa HRC 50 gewährleisten

Stahlsorten, die für Bimetall-Sägebänder geeignet sind, sind auch in EP-A-452526 erwähnt.

JP-A-02059211 beschreibt ein Bimetall-Sägeband das mit Zähnen aus Schnellarbeitsstahl ausgerüstet ist.

Ein besonderes, von der Praxis bislang wenig beachtetes Problem besteht bei Sägebändem darin, daß die Schnittleistung nicht nur von der Bandgeschwindigkeit (Umlaufgeschwindigkeit) abhängig ist, sondern auch von der Vorschubgeschwindigkeit des Sägebandes in Richtung Schneidgut, d.h. von der Anpreßkraft. Die mit steigender Schnittgeschwindigkeit zunehmende Wärmeentwicklung begrenzt jedoch die mögliche Erhöhung der Schnittgeschwindigkeit im Hinblick auf die begrenzte Warmfestigkeit der Schneidzähne, so daß sich die Bandgeschwindigkeit nicht beliebig erhöhen läßt. Eine Verbesserung der Schnittleistung läßt sich jedoch mit einem höheren Vorschub bzw. Schneiddruck erreichen, weil dann die Sägezähne tiefer in den zu schneidenden Werkstoff eindringen, sich dann die beim Schneiden entstehende Reibwärme besser verteilt und in den zu schneidenden Werkstoff abgeleitet wird. Um einen verlauffreien bzw. geraden Sägeschnitt zu gewährleisten, ist zudem eine dem erhöhten Vorschub entsprechende höhere Blattspannung erforderlich, die nur möglich ist, wenn der Trägerbandwerkstoff eine ausreichende Biegewechselfestigkeit besitzt.

Eine Erhöhung des Sägebandvorschubs bzw. des Anpreßdrucks läßt sich mit Hilfe von auf den Bandrücken wirkenden Anpreßrollen erreichen. Derar tige Anpreßrollen bestehen üblicherweise aus Hartmetall und führen in dem etwa linienförmigen Kontaktbereich mit dem Bandrücken zu einer speziellen dynamischen Beanspruchung des Trägerbandwerkstoffs, die mit einer elastischen, teilweise aber auch plastischen Verformung des Bandrückens verbunden ist. Der Verformung folgt aufgrund der hohen Bandgeschwindigkeit und der linienförmigen Berührung zwischen Anpreßrolle und Bandrücken stets unmittelbar eine schnelle und völlige Entlastung. Der Bandrücken unterliegt daher einer starken zyklischen Belastung mit hoher Frequenz.

Die Verformung und der Verschleiß sind um so geringer, je größer die Härte und die Zugfestigkeit des Werkstoffs ist. Maßgeblich für die Verschleißfestigkeit ist dabei der Kohlenstoffgehalt. Jedoch sind einer Erhöhung des Kohlenstoffgehalts Grenzen gesetzt, weil es infolge der erwähnten zyklischen Belastung und der im Kontaktbereich Bandrücken/Anpreßrolle entstehenden Reibungswärme lokal zu einer Austenitisierung und angesichts des raschen Wärmeabflusses in den kalten Teil des Trägerbandes und gegebenenfalls auch in das zu schneidende Werkstück zum Entstehen eines dynamischen induzierten martensitischen Gefüges mit hoher Härte und Sprödigkeit kommen kann. Der dabei entstehende sogenannte Reibmartensit führt zum Entstehen feiner Oberflächenrisse, die sich infolge des Verdrehens und der starken Durchbiegung eines Sägebandes im Bereich der Umlenkrollen sehr schnell ausbreiten und dann zur Zerstörung des Sägebands führen. So erhöht schon eine nur 2 um breite Randzone aus Reibmartensit die Wahrscheinlichkeit eines Bandbruchs um den Faktor 60.

Die Erfindung will die aus der Verwendung einer Anpreßrolle folgenden Nachteile vermeiden.

Um dies zu erreichen, schlägt die Erfindung einen speziellen Trägerbandwerkstoff in Gestalt eines Stahls mit 0,25 bis 0,35% Kohlenstoff, 0,3 bis 0,5% Silizium, 0,8 bis 1,5% Mangan, 1,0 bis 2,0% Molybdän, 1,5 bis 3,5% Chrom, 0,5 bis 1,5% Nickel, 0,5 bis 2,5% Wolfram, 0,15 bis 0,30% Vanadium, 0,05 bis 0,10% Niob, 0,05 bis 1,0% Kupfer, bis 0,2% Aluminium und bis 1% Kobalt, Rest Eisen einschließlich erschmelzungsbedingter Verunreinigungen vor.

Dieser Stahl eignet sich als Trägerbandwerkstoff insbesondere in Verbindung mit Schneidzähnen aus einem Hochgeschwindigkeitsstahl mit 1,0 bis 2,0% Kohlenstoff, 3 bis 6% Chrom, 1 bis 5% Vanadium, 3 bis 10% Molybdän, 4 bis 10% Wolfram, 4 bis 10% Kobalt, bis 1% Silizium, bis 1% Mangan, bis 0,5 % Niob und bis 0,5% Stickstoff, Rest Eisen einschließlich erschmelzungsbedingter Verunreinigungen.

Vorzugsweise besteht das Trägerband jedoch aus einem Stahl mit 0,25 bis 0,35% Kohlenstoff, 0,3 bis 0,5% Silizium, 0,8 bis 1,5% Mangan, 1,2 bis 1,8% Molybdän, 1,5 bis 2,5% Chrom, 0,5 bis 1,5% Nickel, 1,2 bis 1,8% Wolfram, 0,1 bis 0,8% Kupfer, 0,15 bis 0,30% Vanadium und 0,05 bis 0,10% Niob, Rest einschließlich erschmelzungsbedingter Verunreinigungen Eisen.

Unabhängig davon eignet sich für den Schneidteil des Sägebandes insbesondere ein Hochgeschwindigkeitsstahl mit 1,0 bis 1,8% Kohlenstoff, 3,4 bis 4,4% Chrom, 1,6 bis 4,0% Vanadium, 3,2 bis 6,5% Molybdän, 6 bis 10% Wolfram und 4 bis 10% Kobalt.

Das erfindungsgemäße Sägeband zeichnet sich durch eine hohe Biegewechselfestigkeit und gleichzeitig durch eine hohe Gefügestabilität bei dynamischer Druckbelastung sowie ein günstiges Schweißverhalten beim Verbinder des Trägerbands mit dem Schneidteil beispielsweise durch Laser oder Elektronenstrahlüchwäißen ohne Zusatzwerkstoff aus. Das günstige Schweißverhalten zeigt sich daran, daß im Bereich der Schmelzzone keine Haarrisse auftreten und die Härte im Bereich der Schweißnaht bzw. in der Wärmeeiriflüßzone bei geringer Schwankungsbreite einheitlich ist.

Die geringe Empfindlichkeit des Trägerbandwerkstoffs im Hinblick auf das Entstehen von Reibmartensit auch bei hohem Anpreßdruck beruht vomehmlich auf dessen Gehalten an Chrom, Wolfram und Molybdän; diese Legierungselemente verschieben die Belastungsgrenze, jenseits derer Reibmartensit entsteht, zu erheblich höheren Anpreßdrücken bzw. Vorschubgeschwindigkeiten. Die Gefahr des Entstehens von Reibmartensit ist besonders gering, wenn das Verhältnis der Gehalte an Wolfram und Molybdän 0,6 bis 1,5 oder 0,8 bis 1,4 beträgt und vorzugsweise bei 1 liegt.

Auch die Anwesenheit von Kupfer wirkt sich günstig im Hinblick auf das Entstehen von Reibmartensit und Rissen sowie das Rißwachstum aus, weil Kupfer die Gefügestabilität auch bei hohen Abkühlungsgeschwindigkeiten verbessert. Dies gilt nicht nur für den Bereich des von den Anpreßrollen beanspruchten Bandrückens, sondern in gleicher Weise auch für die Schweißnaht zwischen Trägerband und Schneidteil. Schließlich ersetzt das Kupfer bei dem erfindungsgemäßen Trägerbandwerkstoff auch das ansonsten im Hinblick auf die Zähigkeit und Festigkeit der Schweißzone notwendige Aluminium im Trägerband.

Versuche haben gezeigt, daß die Breite der Verformungszone im Bereich des Bandrückens eines erfindungsgemäßen Trägerbandes bei einer 1 mm dicken Bandsäge im Falle einer Anpreßrolle mit einem Durchmesser von 12 mm und einem Anpreßdruck von 2 kN nur etwa 0,12 mm beträgt und daß sich bei einer Bandgeschwindigkeit von 20 m/min das Band um die halbe Verformungsbreite, also um 0,06 mm in nur 0,18 Millisekunden weiterbewegt.

Die Erfindung wird nachfolgend anhand von Ausführungsbeispielen und der Zeichnungen des näheren erläutert. In der Zeichnung zeigen:
- Fig. 1: die perspektivische Darstellung einer Maschine zum Prüfen der Bandrückenbeständigkeit,
- Fig. 2: eine grafische Darstellung des Entstehens von Reibmartensit in Abhängigkeit von dem Anpreßdruck und
- Fig. 3: die Abhängigkeit der Biegewechselfestigkeit von dem Verhältnis der Gehalte an Wolfram und Molybdän im Trägerbandwerkstoff.

In der nachfolgenden Tabelle I sind zwei erfindungsgemäße Trägerbandwerkstoffe TB1 und TB2 sowie zwei herkömmliche Trägerbandwerkstoffe TB3 und TB4 sowie vier Sägezahnwerkstoffe Z1 bis Z4 aus Hochgeschwindigkeitsstahl zusammengestellt.

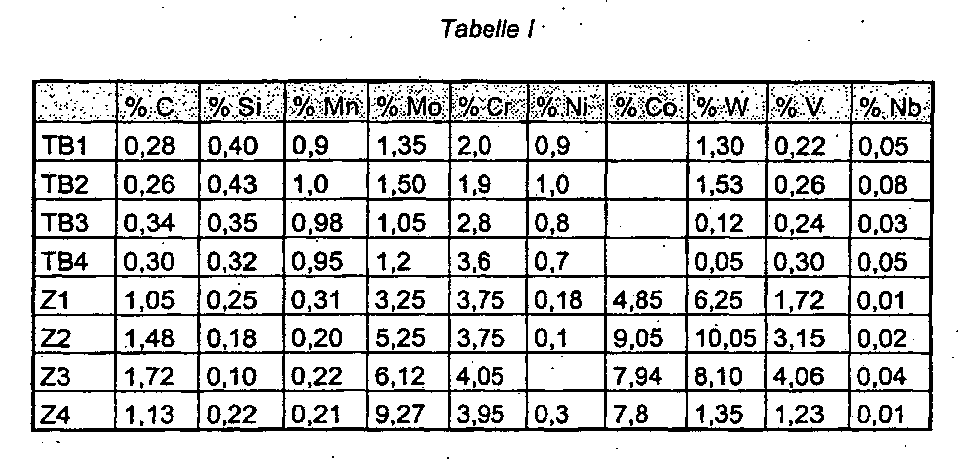

Die nachfolgende Tabelle II gibt die Werkstoffkombinationen für fünf Sägebänder S1 bis S5 wieder, von denen Proben im Hinblick auf ihre Gefügestabilität und Biegewechselfestigkeit untersucht wurden.

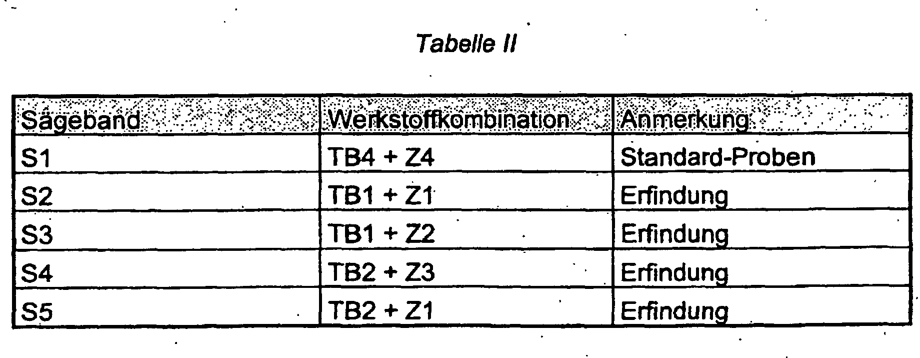

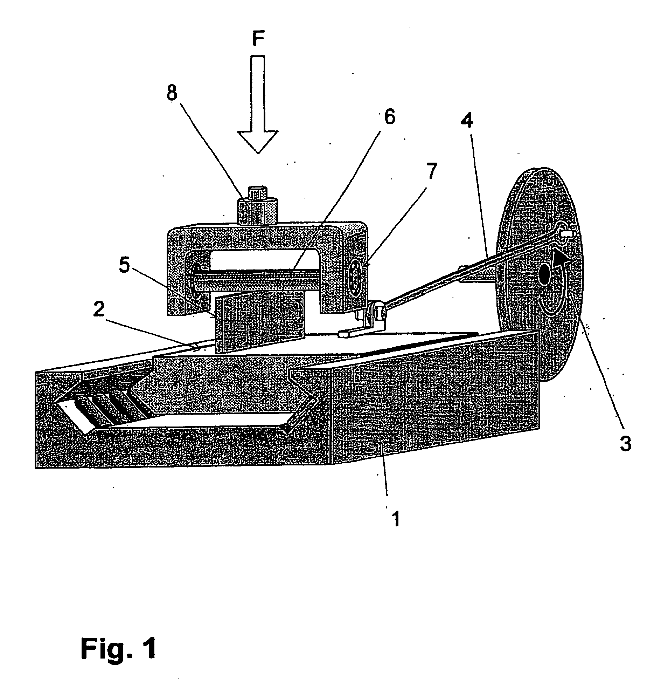

Bei den Versuchen zur Prüfung der Gefügestabilität des Trägerbandwerkstoffs wurden Proben der Sägebänder S1 bis S5 mit Hilfe des Prüfgeräts gemäß Fig. 1 untersucht. Dieses Gerät besteht aus einem Bett 1 für einen Pendeltisch 2, der mit Hilfe eines Kurbelantriebs aus einer angetriebenen Scheibe 3 und einer Pleuelstange 4 in Abhängigkeit von der Drehzahl der Scheibe 3 hin- und herbewegt wird. Die zu untersuchende Probe 5 ist zwischen dem Schlitten 2 und einer Hartmetallrolle 6 eingespannt, die in einem U-förmigen Bügel 7 drehbar gelagert ist. Die veränderliche Anpreßkraft F wird über einen Dorn 8 in den Bügel eingeleitet.

Die Probe 5 ist auf zeichnerisch nicht dargestellte Art und Weise gegen jede Bewegung im Verhältnis zu dem Pendeltisch 2 gesichert.

In Abhängigkeit von der Drehgeschwindigkeit der Antriebsscheibe 3 lassen sich mit der Prüfvorrichtung unterschiedliche Bandgeschwindigkeiten bei unterschiedlichem Anpreßdruck bzw. unterschiedlicher dynamischer Beanspruchung simulieren, da die Geschwindigkeit der Probe in den Umkehr- bzw. Totpunkten null ist und sich demgemäß hier ein stets gleicher Geschwindigkeitsabfall und Geschwindigkeitsanstieg ergibt.

Für die (statische) Belastung F der Rolle 6 wurde der Faktor K der Stribeckschen Wälzpressung entsprechend der Formel K = F / (Dxl_{eff}) verwendet (G. Niemann, Maschinenelemente, Band I, Seiten 258/260; Springer Verlag 1975). Die Stribecksche Wälzpressung trägt der spezifischen Beanspruchung der der linienförmigen wälzenden Berührung Anpressrolle/Sägebandrücken Rechnung.

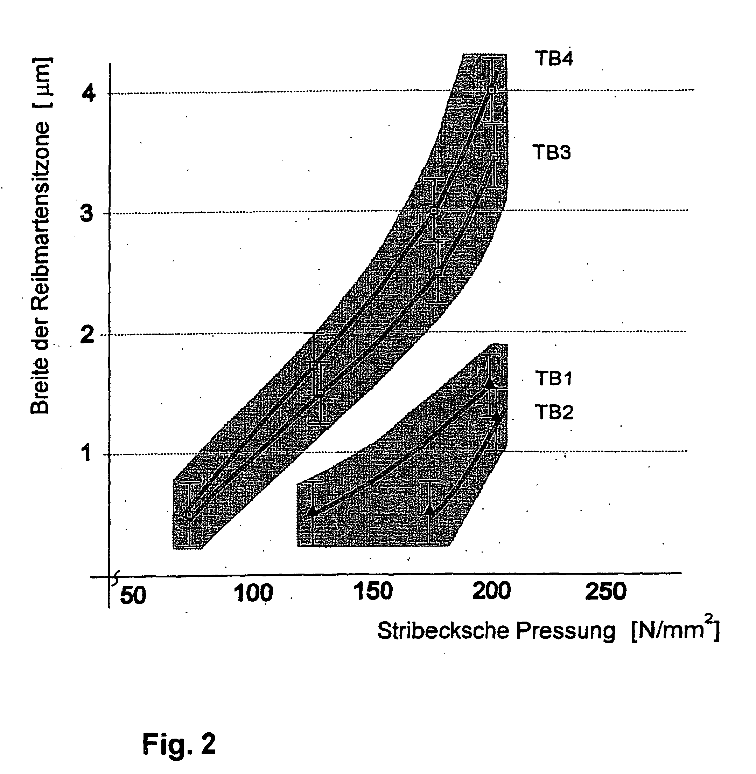

An den einzelnen Proben ließen sich für insgesamt vier Laststufen bei einer Bewegungsgeschwindigkeit der Proben von 20 m/min durch Anätzen die Breite der Randzone aus Reibmartensit bei den erfindungsgemäßen Trägerbandwerkstoffen TB1 und TB2 im Vergleich mit den beiden herkömmlichen Trägerbandwerkstoffen TB3 und TB4 darstellen. Das Diagramm der Fig. 2 zeigt deutlich, daß die Breite der Reibmartensitzone in Abhängigkeit von der Stribeckschen Pressung bei den erfindungsgemäßen Proben TB1 und TB2 wesentlich geringer ist als bei den Vergleichsproben TB3 und TB4.

Zur Bestimmung der Biegewechselfestigkeit wurden Blechstreifen der Abmessung 8 x 1,35 x 80 mm sowie 20 x 1,5 x 80 mm bei einer Temperatur von 1180 °C unter Schutzgas austenitisierend geglüht und abgeschreckt sowie anschließend dreimal bei 560 °C angelassen.

Die Proben wurden sodann einer Schwingprüfung in einer weggesteuerten Federnprüfmaschine (Bauart Bosch-Federschwinge) Drei-Punkt-Biegeschwell-Versuchen einer Prüfspannung von 583 N/mm² unterworfen.

Die wesentlichen Bestandteile der Federschwinge sind ein Schwingbalken, der am einen Ende in einem Festlager gehalten und am anderen Ende von einem verstellbaren Doppelexzenter angetrieben wird, und zwei über Handräder parallel höhenverstellbaren Traversen (Grundplatten) einer oberen und einer unteren Prüfetage. Die Hubhöhe des Exzenters läßt sich in Stufen von 1,5 mm einstellen zwischen 0 und 36 mm, die Hubamplitude nimmt linear von 0 (Festlager) bis auf den Höchstwert am Exzenter zu. Auf der unteren und der oberen Prüfetage befinden sich jeweils bis zu sechs Proben-Aufnahmen mit je 16 Probenplätzen nebeneinander.

Die Prüflinge werden an beiden Enden lose in die Aufnahmen eingelegt und bilden auf zwei Lagerstellen frei aufliegende Biegeträger der freien Länge L. Die Krafteinteilung zur Erzeugung eines entsprechenden Biegemomentes geschah durch eine mittige Durchbiegung, wozu über jeder einzelnen Probe ein Kontaktstück aus Hartmetall angeordnet und genau mittig positioniert war.

Alle Proben einer Lage (Etage) wurden mit Hilfe einer gemeinsamen Kontakt-Leiste durchgebogen. Jede der insgesamt 12 Kontaktleisten war mit 16 Hartmetall-Einzelkontakten versehen. Außerdem waren die Kontakte isoliert auf ihren Leisten angeordnet, so daß jede Probe mit ihrem berührenden Kontakt einen eigenen Stromkreis bildet. Beim Bruch einer Probe wurde dieser Stromkreis unterbrochen und so über eine Verkabelung an einen Mikroprozessor gemeldet, der dem jeweiligen Prüfplatz die aktuelle Schwingzahl als Bruchschwingzahl zuordnete.

Die Prüfspannung wurde nach einer bekannten Formel aus der gemessenen Durchbiegung und den Bandabmessungen für ein E-Modul von 206.000 N/mm² berechnet.

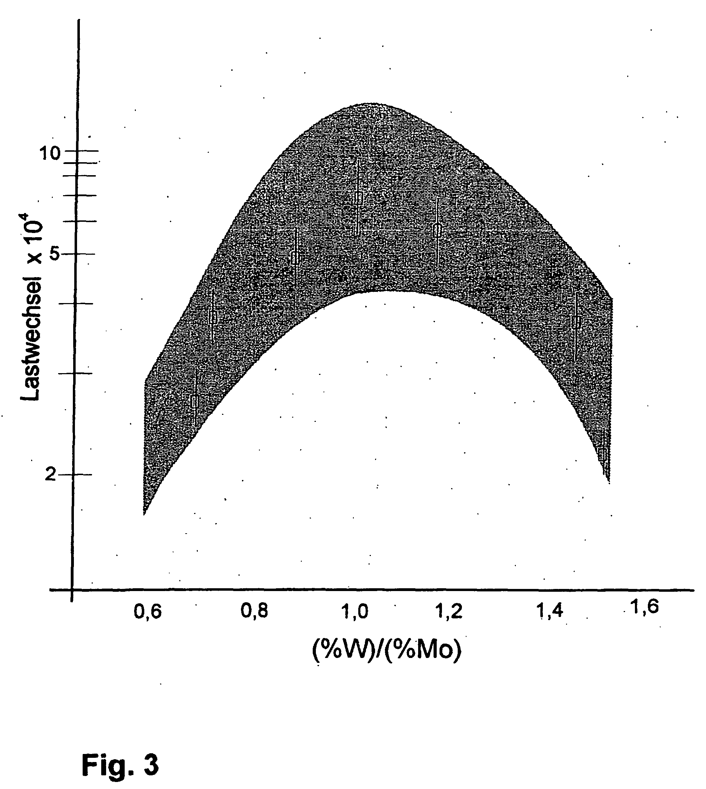

Das Diagramm der Fig. 3 gibt die Zahl der jeweiligen Lastwechsel in Abhängigkeit vom Verhältnis der Gehalte an Wolfram und Molybdän im Bereich von etwa 0,6 bis etwa 1,5 wieder. Dabei zeigt sich deutlich ein Maximum bei einem Verhältnis von 1,0.

Bei Sägeversuchen mit Rohren der Werkstoffnummer 1.4112 wurde die Standzeit eines herkömmlichen Sägebandes S1 (Standardprobe) bei einer Anfangsschnittleistung von 20 cm²/min mit 100% angesetzt und ergab sich bei dem erfindungsgemäßen Sägeband S2 eine Standzeit von 280%. Bei einem weiteren Versuch mit dem Sägeband S2 wurde der Anpreßdruck des Sägebandes so weit erhöht, daß sich eine Anfangsschnittleistung von 35 cm²/min ergab. Die Standzeit betrug bei diesem Versuch 230%. Weitere Versuche mit den Sägebändem S3 ergaben bei einer Anfangsschnittleistung von 35 cm²/min eine Standzeit von 340% und bei dem Sägeband S4 eine Standzeit von 345%, während das erfindungsgemäße Sägeband S5 bei einer Anfangsgeschwindigkeit von 35 cm²/min eine Standzeit von 295% erreichte. Hingegen betrug die Standzeit des herkömmlichen Sägebandes S1 bei der vorerwähnten Anfangsschnittleistung nur 58%. Dies ist auf das Entstehen von Reibmartensit und dadurch verursachte Ermüdungsbrüche im Bandrücken zurückzuführen.

Die Versuche zeigen insgesamt die hohe Randzonenbeständigkeit des erfindungsgemäßen Sägebandes bei dynamischer Beanspruchung auch im Falle hoher Schnittleistungen.

## Patentansprüche

1. Bimetall-Sägeband mit einem Trägerband und einem Schneidteil aus einem Schnellarbeitsstahl, **gekennzeichnet durch** ein Trägerband aus einem Stahl mit
| | |
|---|---|
| 0,25 bis 0,35% | Kohlenstoff |
| 0,3 bis 0,5% | Silizium |
| 0,8 bis 1,5% | Mangan |
| 1,0 bis 2,0% | Molybdän |
| 1,5 bis 3,5% | Chrom |
| 0,5 bis 1,5% | Nickel |
| 0,5 bis 2,5% | Wolfram |
| 0,15 bis 0,30% | Vanadium |
| 0,05 bis 0,10% | Niob |
| 0,05 bis 1,0% | Kupfer |
| bis 0,2% | Aluminium |
| bis 1% | Kobalt, |
Rest Eisen einschließlich erschmelzungsbedingter Verunreinigungen.

2. Sägeband, **dadurch gekennzeichnet, daß** das Trägerband aus einem Stahl mit
| | |
|---|---|
| 0,25 bis 0,35% | Kohlenstoff |
| 0,3 bis 0,5% | Silizium |
| 0,8 bis 1,5% | Mangan |
| 1,2 bis 1,8% | Molybdän |
| 1,5 bis 2,5% | Chrom |
| 0,5 bis 1,5% | Nickel |
| 1,2 bis 1,8% | Wolfram |
| 0,1 bis 0,8% | Kupfer |
| 0,15 bis 0,30% | Vanadium |
| 0,05 bis 0,10% | Niob, |
Rest Eisen einschließlich erschmelzungsbedingter Verunreinigungen besteht.

3. Sägeband nach Anspruch 1 oder 2, **dadurch gekennzeichnet, daß** mindestens die Zähne des Schneidteils aus einem Stahl mit
| | |
|---|---|
| 1,0 bis 2,0% | Kohlenstoff |
| 3 bis 6% | Chrom |
| 1 bis 5% | Vanadium |
| 3 bis 10% | Molybdän |
| 4 bis 10% | Wolfram |
| 4 bis 10% | Kobalt |
| bis 1% | Silizium |
| bis 1% | Mangan |
| bis 0,5 % | Niob |
| bis 0,5% | Stickstoff, |
Rest Eisen einschließlich erschmelzungsbedingter Verunreinigungen bestehen.

4. Sägeband nach einem der Ansprüche 1 bis 3, **dadurch gekennzeichnet, daß** zumindest die Zähne des Schneidteils aus einem Stahl mit
| | |
|---|---|
| 1,0 bis 1,8% | Kohlenstoff |
| 3,4 bis 4,4% | Chrom |
| 1,6 bis 4,0% | Vanadium |
| 3,2 bis 6,5% | Molybdän |
| 6 bis 10% | Wolfram |
| 4 bis 10% | Kobalt, |
Rest Eisen einschließlich erschmelzungsbedingter Verunreinigungen bestehen.

5. Sägeband nach einem der Ansprüche 1 bis 4, **dadurch gekennzeichnet, daß** das Verhältnis der Gehalte an Wolfram und Molybdän zueinander 0,6 bis 1,5 beträgt.

6. Sägeband nach einem der Ansprüche 1 bis 5, **dadurch gekennzeichnet, daß** der Schneidteil pulvermetallurgisch hergestellt ist.

7. Verwendung eines Sägebandes nach einem der Ansprüche 1 bis 6 in Verbindung mit einer auf den Bandrücken wirkenden Anpressrolle.

## Claims

1. Bimetallic saw band with a support band and a cutting portion made from a high speed steel, **characterised in that** it has a support band comprising steel with
| | |
|---|---|
| 0.25% to 0.35% | carbon |
| 0.3% to 0.5% | silicon |
| 0.8% to 1.5% | manganese |
| 1.0% to 2.0% | molybdenum |
| 1.5% to 3.5% | chromium |
| 0.5% to 1.5% | nickel |
| 0.5% to 2.5% | tungsten |
| 0.15% to 0.30% | vanadium |
| 0.05% to 0.10% | niobium |
| 0.05% to 1.0% | copper |
| up to 0.2% | aluminium |
| up to 1% | cobalt, |
the remainder being iron including impurities from the smelting process.

2. Saw band, **characterised in that** the support band comprises steel with
| | |
|---|---|
| 0.25% to 0.35% | carbon |
| 0.3% to 0.5% | silicon |
| 0.8% to 1.5% | manganese |
| 1.2% to 1.8% | molybdenum |
| 1.5% to 2.5% | chromium |
| 0.5% to 1.5% | nickel |
| 1.2% to 1.8% | tungsten |
| 0.1% to 0.8% | copper |
| 0.15% to 0.30% | vanadium |
| 0.05% to 0.10% | niobium, |
the remainder being iron including impurities from the smelting process.

3. Saw band according to claim 1 or 2, **characterised in that** at least the teeth of the cutting portion comprise a steel with
| | |
|---|---|
| 1.0% to 2.0% | carbon |
| 3% to 6% | chromium |
| 1% to 5% | vanadium |
| 3% to 10% | molybdenum |
| 4% to 10% | tungsten |
| 4% to 10% | cobalt |
| up to 1% | silicon |
| up to 1% | manganese |
| up to 0.5% | niobium |
| up to 0.5% | nitrogen, |
the remainder being iron including impurities from the smelting process.

4. Saw band according to one of the claims 1 to 3, **characterised in that** at least the teeth of the cutting portion comprise a steel with
| | |
|---|---|
| 1.0% to 1.8% | carbon |
| 3.4% to 4.4% | chromium |
| 1.6% to 4.0% | vanadium |
| 3.2% to 6.5% | molybdenum |
| 6% to 10% | tungsten |
| 4% to 10% | cobalt, |
the remainder being iron including impurities from the smelting process.

5. Saw band according to one of the claims 1 to 4, **characterised in that** the ratio of the contents of tungsten and molybdenum to each other is between 0.6 and 1.5.

6. Saw band according to one of the claims 1 to 5, **characterised in that** the cutting portion is manufactured by powder metallurgical means.

7. Use of a saw band according to one of the claims 1 to 6 in conjunction with a pressure roller acting on the band back.

## Revendications

1. Ruban de scie bimétallique comportant un ruban porteur et un organe de coupe composé d'un acier à coupe rapide, **caractérisé par** un ruban porteur composé d'un acier qui comporte
| | |
|---|---|
| 0,25 à 0,35 % | de carbone |
| 0,3 à 0,5 % | de silicium |
| 0,8 à 1,5 % | de manganèse |
| 1,0 à 2,0 % | de molybdène |
| 1,5 à 3,5 % | de chrome |
| 0,5 à 1,5 % | de nickel |
| 0,5 à 2,5 % | de tungstène |
| 0,15 à 0,30 % | de vanadium |
| 0,05 à 0,10 % | de niobium |
| 0,05 à 1,0 % | de cuivre |
| jusqu'à 0,2 % | d'aluminium |
| jusqu'à 1 % | de cobalt, |
le reste étant du fer, y compris les impuretés conditionnées par l'élaboration de l'acier.

2. Ruban de scie, **caractérisé en ce que** le ruban porteur est réalisé en un acier qui comporte
| | |
|---|---|
| 0,25 à 0,35 % | de carbone |
| 0,3 à 0,5 % | de silicium |
| 0,8 à 1,5 % | de manganèse |
| 1,2 à 1,8 % | de molybdène |
| 1,5 à 2,5 % | de chrome |
| 0,5 à 1,5 % | de nickel |
| 1,2 à 1,8 % | de tungstène |
| 0,1 à 0,8 % | de cuivre |
| 0,15 à 0,30 % | de vanadium |
| 0,05 à 0,10 % | de niobium |
le reste étant du fer, y compris les impuretés conditionnées par l'élaboration de l'acier.

3. Ruban de scie selon la revendication 1 ou 2, **caractérisé en ce qu'**au moins les dents de l'organe de coupe sont réalisés en un acier qui comporte
| | |
|---|---|
| 1,0 à 2,0 % | de carbone |
| 3 à 6 % | de chrome |
| 1 à 5 % | de vanadium |
| 3 à 10 % | de molybdène |
| 4 à 10 % | de tungstène |
| 4 à 10 % | de cobalt |
| jusqu'à 1 % | de silicium |
| jusqu'à 1 % | de manganèse |
| jusqu'à 0,5 % | de niobium |
| jusqu'à 0,5 % | d'azote, |
le reste étant du fer, y compris les impuretés conditionnées par l'élaboration de l'acier.

4. Ruban de scie selon l'une des revendications 1 à 3, **caractérisé en ce qu'**au moins les dents de l'organe de coupe sont réalisés en un acier qui comporte
| | |
|---|---|
| 1,0 à 1,8 % | de carbone |
| 3,4 à 4,4 % | de chrome |
| 1,6 à 4,0 % | de vanadium |
| 3,2 à 6,5 % | de molybdène |
| 6 à 10 % | de tungstène |
| 4 à 10 % | de cobalt |
le reste étant du fer, y compris les impuretés conditionnées par l'élaboration de l'acier.

5. Ruban de scie selon l'une des revendications 1 à 4, **caractérisé en ce que** le rapport entre les teneurs en tungstène et en molybdène l'une par rapport à l'autre est compris entre 0,6 et 1,5.

6. Ruban de scie selon l'une des revendications 1 à 5, **caractérisé en ce que** l'organe de coupe est fabriqué en utilisant la métallurgie des poudres.

7. Utilisation d'un ruban de scie selon l'une des revendications 1 à 6 en relation avec un rouleau de pression agissant sur l'arrière du ruban.
